Europäisches Patentamt

European Patent Office

Office européen des brevets

(19)

(11) Veröffentlichungsnummer : **0 042 097**
**B1**

(12) **EUROPÄISCHE PATENTSCHRIFT**

(45) Veröffentlichungstag der Patentschrift :
22.06.83

(21) Anmeldenummer : 81104211.8

(22) Anmeldetag : 02.06.81

(51) Int. Cl.³ : **C 07 C 69/16, C 07 C 69/28,
C 07 C 67/055, B 01 J 23/96,
B 01 J 23/90**

(54) **Verfahren zur Reaktivierung von Palladium oder Platin, sowie Kupfer und Tellur enthaltenden Trägerkatalysatoren.**

(30) Priorität : 12.06.80 DE 3022043

(43) Veröffentlichungstag der Anmeldung :
23.12.81 Patentblatt 81/51

(45) Bekanntmachung des Hinweises auf die Patenterteilung : 22.06.83 Patentblatt 83/25

(84) Benannte Vertragsstaaten :
**CH DE GB LI NL**

(56) Entgegenhaltungen :
**EP A 0 005 452
DE A 2 842 238
DE A 2 943 407**

(73) Patentinhaber : **BASF Aktiengesellschaft
Carl-Bosch-Strasse 38
D-6700 Ludwigshafen (DE)**

(72) Erfinder : **Weitz, Hans-Martin, Dr.
Auf dem Koeppel 40
D-6702 Bad Duerkheim (DE)**
Erfinder : **Fischer, Rolf, Dr.
Bergstrasse 98
D-6900 Heidelberg (DE)**

# Verfahren zur Reaktivierung von Palladium oder Platin, sowie Kupfer und Tellur enthaltenden Trägerkatalysatoren

Diese Erfindung betrifft ein Verfahren zur Reaktivierung von Palladium oder Platin, sowie Kupfer und Tellur enthaltenden Trägerkatalysatoren, die für die Acyloxilierung von gegebenenfalls substituiertem Butadien zu Butendiolestern verwendet werden.

Butendiolester, wie 1,4-Diacetoxy-2-buten, sind wertvolle Zwischenprodukte, z. B. für die Herstellung von Butendiol-1,4, Butandiol-1,4 und Tetrahydrofuran. Butendiol-3,4-diacetat (Vinylglykoldiacetat) ist als Zwischenprodukt zur Herstellung von Vitaminen und anderen biologisch wirksamen Verbindungen geeignet und 2-Methyl-1,4-diacetoxy-2-butene oder 1,1,4-Triacetoxy-2-methyl-2-butene sind wertvolle Zwischenprodukte z. B. für die Synthese von Terpenverbindungen. Man stellt diese Butendiolester bekanntlich z. B. durch katalytische Acetoxilierung von Butadien bzw. Isopren her.

Aus der Japanischen Auslegeschrift 9 993 (1979) ist bekannt, daß sich für solche Acetoxilierungen geeignete Katalysatoren, die Palladium und Tellur auf Aktivkohle als Träger enthalten, dadurch reaktivieren lassen, daß man den Katalysator verminderter Aktivität bei 300 bis 600 °C mit Wasserstoff behandelt. Eine ähnliche Wirkung erzielt man, wenn man den Katalysator verminderter Aktivität zunächst bei 300 bis 600 °C mit Wasserstoff, dann bei 150 bis 350 °C mit Sauerstoff und zuletzt wiederum bei 300 bis 600 °C mit Wasserstoff behandelt (Japanische Auslegeschrift 9 992 (1979)).

Bei der technischen Durchführung dieses Aktivierungsverfahrens ergeben sich, bedingt durch die Agressivität des Wasserstoffs bei diesen Temperaturen, die z. B. zu einer Versprödung der als Gefäßmaterialien verwendeten Metalle führen kann, erhebliche Probleme, insbesondere hinsichtlich der Arbeitssicherheit.

Es wurde nun gefunden, daß sich Palladium oder Platin, sowie Kupfer und Tellur enthaltende Trägerkatalysatoren, die für die Acyloxilierung von gegebenenfalls substituiertem Butadien zu Butendiolestern verwendet werden, vorteilhaft dadurch reaktivieren lassen, daß man die Trägerkatalysatoren in Gegenwart eines unter den Bedingungen dieser Behandlung inerten Gases auf Temperaturen zwischen 200 und 900 °C erhitzt.

Palladium oder Platin und weiterhin Kupfer und Tellur enthaltende Trägerkatalysatoren, die sich nach dieser Erfindung reaktivieren lassen, enthalten beispielsweise, bezogen auf das Katalysatorgewicht, 1 bis 10 % Palladium oder Platin, 0,1 bis 30 % Kupfer und 0,01 bis 10 % Tellur. Von diesen sind solche Trägerkatalysatoren bevorzugt, die je Grammatom Palladium oder Platin 0,01 bis 6, vorzugsweise 1 bis 3,5 Grammatome Kupfer und 0,01 bis 1, vorzugsweise 0,01 bis 0,4 Grammatome Tellur enthalten und in denen intermetallische Phasen der Zusammensetzung $PdCu_3$, $PtCu_3$ oder $PdCu$, $PtCu$ röntgengraphisch nachweisbar sind.

Die Gesamtmenge der auf den Träger aufgebrachten katalytisch wirksamen Metalle beträgt bei diesen Katalysatoren, bezogen auf den Trägerkatalysator z. B. 0,01 bis 30 Gew.-%. Als Trägermaterial enthalten die Katalysatoren z. B. Aktivkohle, Bauxit, Bimsstein, Kieselgel, Kieselgur oder andere Formen der Kieselsäure, Magnesia, Ton oder Tonerde.

Die genannten Palladium, Kupfer und Tellur enthaltenden Trägerkatalysatoren werden für die Acyloxilierung von Butadien oder substituierten 1,3-Dienen, wie Isopren, 2,3-Dimethyl-1,3-butadien, 1,3-Pentadienen, wie Piperylen oder durch Acyloxygruppen substituierten 1,3-Butadienen, wie 1-Acetoxybutadien, 1-Acetoxy-2-methyl-1,3-butadien oder 1-Acetoxy-3-methyl-1,3-butadien verwendet. Dabei werden die genannten Diolefine für sich oder als Mischungen, die z. B. auch noch andere Kohlenwasserstoffe, wie Monoolefine und Paraffinkohlenwasserstoffe enthalten, eingesetzt. Solche Mischungen stehen z. B. als sogenannte $C_4$-Schnitte zur Verfügung. Die Acyloxilierung wird bekanntlich so durchgeführt, daß man die Diene in Gegenwart der Katalysatoren in der Gas- oder Flüssigphase bei Temperaturen von 70 bis 180 °C mit Sauerstoff und niedermolekularen Carbonsäuren, wie Ameisensäure, Essigsäure oder Proplensäure behandelt.

Der Reaktionsdruck ist durch die Verfahrensweise gegeben und kann zwischen atmosphärischem Druck und z. B. 100 bar betragen. Die Acyloxilierung wird chargenweise oder kontinuierlich z. B. mit fixiertem Bett, Wirbelbett oder Dreiphasenfließbett durchgeführt.

Die erfindungsgemäße Reaktivierung der bei dieser Acyloxilierung verwendeten Palladium, Kupfer und Tellur enthaltenden Trägerkatalysatoren nimmt man im technischen Maßstab zweckmäßig vor, sobald die Ausbeute der herzustellenden Butendiolester über ein aus wirtschaftlicher Sicht vertretbares Maß abfällt.

Zweckmäßigerweise wird der zu reaktivierende Katalysator vor dem erfindungsgemäßen Erhitzen in der Inertgasatmosphäre mit einem Lösungsmittel behandelt. Als Lösungsmittel sind z. B. die Carbonsäuren geeignet, mit denen die vorangegangene Acyloxilierung durchgeführt wurde. Essigsäure ist besonders gut geeignet. Man behandelt den zu reaktivierenden Katalysator mit dem Lösungsmittel z. B. 0,5 bis 12 Stunden bei Temperaturen von 20 bis 200 °C, wobei man z. B. 5 bis 50 Gewichtsteile Lösungsmittel je 1 Gewichtsteil Katalysator anwendet. Nach dieser Vorbehandlung wird der Katalysator getrocknet. Man trocknet z. B. in einem Inertgasstrom bei 50 bis 200 °C unter Normaldruck oder im Vakuum.

Zur erfindungsgemäßen Reaktivierung wird der trockene Katalysator dann in einer Inertgasatmosphäre, z. B. 0,5 bis 10 Stunden auf Temperaturen zwischen 200 und 900 °C, vorzugsweise 600 bis 800 °C

0 042 097

erhitzt. Als Inertgas verwendet man z. B. Stickstoff oder Argon.

Nach dem erfindungsgemäßen Verfahren lassen sich die Palladium, Kupfer und Tellur enthaltenden Trägerkatalysatoren, die für die Acyloxilierung von Butadienen zu Butendiolestern verwendet werden, auf technisch einfache Weise und besonders wirksam reaktivieren.

In den Beispielen werden folgende Abkürzungen benutzt :

    trans-1,4-Diacetoxy-2-buten    = trans-1,4-BEDA
    cis-1,4-Diacetoxy-2-buten      = cis-1,4-BEDA
    3,4-Diacetoxy-1-buten          = 3,4-BEDA
    3,4-Hydroxyacetoxy-1-butene    = 3,4-BEMA

Bei den Prozentangaben handelt es sich um Gewichtsprozent.

Beispiel 1

a) Herstellung des Katalysators :

17,9 g Kupferpulver, gelöst in 133 cm³ 33 %iger Salpetersäure, werden bei Raumtemperatur mit 16,68 g PdCl₂, gelöst in 80 cm³ eines warmen Gemisches aus 66 %iger Salpetersäure und 32 %iger Salzsäure (Volumenverhältnis 1 : 1) und 1,25 g TeO₂ in 200 cm³ warmer, 16 %iger Salzsäure, vermischt. Man legt 200 g Aktivkohle (0,3 bis 0,5 mm) vor, die zuvor bei 70 °C 5 Stunden lang mit 15 %iger Salpetersäure gerührt, nach dem Abnutschen neutral gewaschen und bei 150 °C unter Vakuum getrocknet worden war und fügt die vereinigte Metallsalzlösung hinzu. Anschließend gibt man soviel Wasser hinzu, daß die Kohle völlig benetzt ist. Dann wird am Rotationsverdampfer bei 85 °C und Wasserstrahlvakuum zur Trockene eingedampft. Der Katalysator wird 2 Stunden bei 150 °C im Vakuumtrockenschrank, dann 2 Stunden bei 150 °C im Röhrenofen unter strömendem Stickstoff getrocknet. Anschließend wird 6 Stunden bei 200 °C, dann 6 Stunden bei 400 °C mit bei Raumtemperatur mit Methanol gesättigtem Stickstoff und schließlich 0,5 Stunden mit Wasserstoff (20 l/Stunde) bei 800 °C aktiviert. Man läßt unter strömendem Stickstoff auf Raumtemperatur abkühlen. Nach der Elementaranalyse enthält der Katalysator 5,24 % Palladium, 8,8 % Kupfer und 0,53 % Tellur. Die Röntgenanalyse zeigt eine PdCu₃-Phase, die praktisch kein PdCu enthält.

b) Verwendung des Katalysators für die Acetoxilierung von Butadien :

In einem 1-Literkolben werden 25 g des nach Beispiel 1, Absatz a hergestellten und in 600 g Eisessig suspendierten Katalysators bei 90 bis 95 °C intensiv gerührt. Pro Stunde werden durchschnittlich 3 l Butadien, 3 l Sauerstoff und 200 g Eisessig eingeleitet. Über ein Steigrohr mit Fritte läuft das Reaktionsprodukt in Auffanggefäße, deren Inhalt in regelmäßigen Abständen gewogen und analysiert wird.

c) Reaktivierung des Katalysators :

Jeweils nach 100 und 200 Betriebsstunden wird der Katalysator ausgebaut, in 500 ml Eisessig suspendiert, eine Stunde lang auf 95 °C erhitzt, 1,5 Stunden lang im Stickstoffstrom bei 150 °C getrocknet und 0,5 Stunden lang bei 800 °C im Stickstoffstrom (20 l/Stunde) erhitzt. Anschließend wird er erneut in 600 g Eisessig suspendiert und die Acetoxilierung wird wie unter (b) beschrieben weitergeführt.

Nach insgesamt 300 Betriebsstunden wird bei der gaschromatographischen Analyse der Reaktionsausträge festgestellt, daß 1 630 g Butendioldiacetate und -monoacetate entstanden sind. Das mittlere Molverhältnis von trans-1,4-BEDA zu cis-1,4-BEDA, 3,4-BEDA und 3,4-BEMA beträgt 1 : 0,16 : 0,14 : 0,01.

Beispiel 2 (Vergleichsbeispiel)

Man verfährt wie im Beispiel 1 beschrieben, wobei man jedoch keine Reaktivierung nach Absatz (c) durchführt, sondern die Acetoxilierung 300 Stunden lang ohne Unterbrechung vornimmt. Dabei werden nur 1 117 g. Butendioldiacetate und -monoacetate erhalten. Das mittlere Verhältnis von trans-1,4-BEDA zu cis-1,4-BEDA, 3,4-BEDA und 3,4-BEMA beträgt 1 : 0,17 : 0,14 : 0,01.

Beispiel 3 (Vergleichsbeispiel)

Man verfährt wie im Beispiel 1 Absatz b und c beschrieben, wobei man jedoch 25 g eines nach der DE-PS 2 217 452 hergestellten Palladium-Tellurkatalysators (5,39 % Pd, 0,68 % Te) verwendet. Nach der gaschromatographischen Analyse sind während der 300 Betriebsstunden 459 g Butendioldiacetate und -monoacetate entstanden. Das mittlere Molverhältnis von trans-1,4-BEDA zu cis-1,4-BEDA, 3,4-BEDA und 3,4-BEMA beträgt 1 : 0,13 : 0,13 : 0,01.

3

Wiederholt man diesen Versuch, wobei man diesmal jedoch keine Reaktivierung nach Absatz (c) durchführt, so erhält man nach der 300 stündigen ununterbrochenen Acetoxilierung 501 g Butendioldiacetate und -monoacetate.

## Ansprüche

1. Verfahren zur Reaktivierung von Palladium oder Platin, sowie Kupfer und Tellur enthaltenden Trägerkatalysatoren, die für die Acyloxilierung von gegebenenfalls substituiertem Butadien zu Butendiolestern verwendet werden, dadurch gekennzeichnet, daß man die Trägerkatalysatoren in Gegenwart eines unter den Bedingungen dieser Behandlung inerten Gases auf Temperaturen zwischen 200 und 900 °C erhitzt.

2. Verfahren nach Anspruch 1, dadurch gekennzeichnet, daß man die Reaktivierung bei Temperaturen von 600 bis 800 °C durchführt.

3. Verfahren nach Anspruch 1, dadurch gekennzeichnet, daß man als inertes Gas Stickstoff oder Argon verwendet.

## Claims

1. A process for reactivating supported catalysts which contain palladium or platinum in addition to copper and tellurium and which are used for the acyloxylation of unsubstituted or substituted butadiene to give butenediol esters, wherein the supported catalysts are heated at from 200 to 900 °C in the presence of a gas which is inert under these treatment conditions.

2. A process as claimed in claim 1, wherein the reactivation is carried out at from 600 to 800 °C.

3. A process as claimed in claim 1, wherein nitrogen or argon is used as the inert gas.

## Revendications

1. Procédé pour la réactivation de catalyseurs sur support, contenant du palladium ou du platine, ainsi que du cuivre et du tellure, utilisés dans les acyloxylations du butadiène éventuellement substitué en esters de butènediol, caractérisé en ce que l'on chauffe les catalyseurs sur support en présence d'un gaz inerte dans les conditions opératoires à des températures comprises entre 200 et 900 °C.

2. Procédé suivant la revendication 1, caractérisé en ce que la réactivation est effectuée entre 600 et 800 °C.

3. Procédé suivant la revendication 1, caractérisé en ce que le gaz inerte est choisi parmi l'azote et l'argon.